# EUROPÄISCHE PATENTANMELDUNG

(11) **EP 2 489 970 A1**
(43) Veröffentlichungstag der Anmeldung: **22.08.2012**
(21) Anmeldenummer: 11155212.1
(22) Anmeldetag: 21.02.2011
(51) Int. Cl.: F27B 3/08, F27B 3/28, F27D 19/00, F27D 21/00, F27D 21/04, C21C 5/52

(54) **Verfahren zum Betrieb eines Elektrolichtbogenofens für eine kontinuierliche DRI-Zufuhr, Elektrolichtbogenofen für eine kontinuierliche DRI-Zufuhr sowie Steuer- und/oder Regeleinrichtung für einen solchen Elektrolichtbogenofen**

(71) Anmelder: SIEMENS AKTIENGESELLSCHAFT, 80333 München (DE)
(72) Erfinder: Matschullat, Thomas, 90542, Eckental (DE); Voß-Spilker, Peter, 77704, Oberkirch (DE); Rieger, Detlef, 85598, Baldham (DE)

(57) **Zusammenfassung**

Verfahren zum Betrieb eines Elektrolichtbogenofens für eine kontinuierliche DRI-Zufuhr, Elektrolichtbogenofen für eine kontinuierliche DRI-Zufuhr sowie Steuer- und/oder Regeleinrichtung für einen solchen Elektrolichtbogenofen

Im Betrieb eines Elektrolichtbogenofens (1) für eine kontinuierliche DRI-Zufuhr, wobei der Elektrolichtbogenofen (1) mindestens eine Elektrode (3a, 3b, 3c) zum Erzeugen einer Schmelze in einem Ofengefäß (2) umfasst, wird der Schmelze Sauerstoff zugeführt. Um ein Entstehen von Eisbergen bzw. von Boiling-Effekten zu verhindern, werden Schwingungen am Elektrolichtbogenofen (1) gemessen, mit deren Hilfe mindestens eine Zustandsgröße (Zᵢₛₜ) bestimmt wird und bei Abweichung der Zustandsgröße (Zᵢₛₜ) von einem vorgegebenen Soll-Wert (Zₛₒₗₗ) werden Steuer- und/oder Regelsignale ausgegeben, durch welche das Verhältnis zwischen dem Kohlenstoffgehalt und dem Sauerstoffgehalt in dem Ofengefäß geändert wird.

## Beschreibung

Verfahren zum Betrieb eines Elektrolichtbogenofens für eine kontinuierliche DRI-Zufuhr, Elektrolichtbogenofen für eine kontinuierliche DRI-Zufuhr sowie Steuer- und/oder Regeleinrichtung für einen solchen Elektrolichtbogenofen

Die Erfindung betrifft ein Verfahren zum Betrieb eines Elektrolichtbogenofens für eine kontinuierliche DRI-Zufuhr. Die Erfindung betrifft weiterhin einen Elektrolichtbogenofen für eine kontinuierliche DRI-Zufuhr sowie eine Steuer- und/oder Regeleinrichtung für einen solchen Elektrolichtbogenofen.

In Elektrolichtbogenöfen, die anstelle von Schrott im wesentlichen mit direkt reduziertem Eisen (DRI), weiterhin auch als Einsenschwamm bezeichnet, kontinuierlich über Förderbänder chargiert werden, kommt es trotz Anpassung der eingebrachten Leistung oder trotz Abstimmung mit einem Prozessmodell häufig zur Bildung von sogenannten Eisbergen. Diese entstehen in der Regel dadurch, dass die zugeführte Menge an DRI zu hoch ist bzw. die tatsächlich zugeführte Energie niedriger ist als die zum Einschmelzen des Eisenschwamms notwendige Energiemenge. Aufgrund des talgigen bzw. festen Eisbergs in der Schmelze gestaltet sich der Wärmeübergang an den selbigen als äußerst schwierig. Dies führt dazu, dass aufgrund abnehmender Temperatur in der Schmelze, bedingt durch noch nicht aufgeschmolzenes Material, die Schlacke beginnt schlecht bzw. gar nicht zu schäumen. Bleibt die Energiebilanz über längeren Zeitraum nicht gedeckt, wächst der Eisberg im Ofen an.

Das Auftreten eines Eisbergs führt auch zu verlängerten Prozesszeiten, was durch den schlechten Wärmeübergang an ein derartiges talgiges Agglomerat bedingt ist. Der Eisberg wird nach dem Anhalten der DRI-Zufuhr nur langsam aufgeschmolzen und kann schlimmstenfalls zum sogenannten Boiling führen, d.h. zum unkontrollierten Aufkochen der Schmelze durch Restaufschmelzung verbunden mit stoßartigem Freisetzen von Kohlenmonoxid, wobei das Gas dann nahezu schlagartig entweicht. Dieser unerwünschte Effekt kann zur Sicherheitsgefährdung und Sachschäden am Ofen und an der angeschlossenen Peripherie, wie etwa einer Entstaubung- oder Filteranlage, führen.

Ein Verfahren zur Regelung des Kohlenmonoxid-Austrags bei einem metallurgischen Schmelzverfahren im Hinblick auf eine Verhinderung von Boiling-Effekten ist aus der WO 2008/049673 A1 zu entnehmen. Bei diesem Verfahren wird ein Istwert des aus der Schmelze entweichenden Kohlenstoffstroms ermittelt, und mit einem Sollwert verglichen, der sich aus der zugeführten Sauerstoffmenge und dem Kohlenstoffgehalt der Schmelze unter Berücksichtigung etwaiger sonstiger Reaktionen ergibt. Im Falle eines Zurückbleibens des Istwertes gegenüber dem Sollwert werden Maßnahmen zur Verhinderung von Boiling-Effekten eingeleitet, indem die Sauerstoffzufuhr zur Schmelze reduziert wird oder der Schmelze zusätzlich Kohlenstoff zugeführt wird. Nachteilig bei dem in der WO 2008/049673 A1 beschriebenen Verfahren ist jedoch, dass der Ort und der Zeitpunkt zum Bilden des Eisbergs nicht detektiert werden können.

Der Erfindung liegt die Aufgabe zugrunde, einen Betrieb eines Elektrolichtbogenofens für eine kontinuierliche DRI-Zufuhr zu ermöglichen, bei dem ein Entstehen von Eisbergen bzw. von Boiling-Effekten im Elektrolichtbogenofen unterdrückt wird.

Die Aufgabe wird erfindungsgemäß gelöst durch ein Verfahren zum Betrieb eines Elektrolichtbogenofens für eine kontinuierliche DRI-Zufuhr, wobei der Elektrolichtbogenofen mindestens eine Elektrode zum Erzeugen einer Schmelze in einem Ofengefäß umfasst, wobei im Betrieb der Schmelze Sauerstoff zugeführt wird und wobei Schwingungen am Elektrolichtbogenofen gemessen werden, mit deren Hilfe mindestens eine Zustandsgröße bestimmt wird und bei Abweichung der Zustandsgröße von einem vorgegebenen Soll-Wert Steuer- und/oder Regelsignale zum Ändern des Verhältnisses zwischen dem Kohlenstoffgehalt und dem Sauerstoffgehalt in dem Ofengefäß ausgegeben werden.

Der Vorteil eines Elektrolichtbogenofens mit einer kontinuierlichen DRI-Zufuhr ist, dass die Verweilzeiten der Schmelze gegenüber anderen Öfen verringert sind, da der Eisenschwamm Kohlenstoff enthalt und somit Eisen und Kohlenstoff gleichzeitig zugeführt werden.

Die Erfindung basiert auf der Idee, durch Messen der Schwingungen am Elektrolichtbogenofen eine Zustandsgröße zu bestimmen, welche Informationen über den Zustand der Schmelze im Ofen liefert. Der aktuelle Ist-Wert dieser Zustandsgröße wird dabei mit einem vorgegebenen Soll-Wert verglichen. Bei Abweichungen des Ist-Werts vom Soll-Wert, insbesondere bei Abweichungen, die einen Schwellwert überschreiten, wird das Verhältnis zwischen dem Kohlenstoffgehalt und dem Sauerstoffgehalt in dem Ofen neu eingestellt, um ein optimales Kohlenstoff-Sauerstoff-Verhältnis zu erzielen, durch welches die Bildung von Eisbergen rechtzeitig verhindert wird.

Vorteilhafterweise wird als Zustandsgröße die Höhe einer Schaumschlacke der Schmelze bestimmt. Der Zustand der Schlacke bzw. die Höhe der Schlacke ist ein Maß für die Effektivität der Energieeinbringung im Elektrolichtbogenofen. Durch messen der Höhe der Schaumschlacke kann somit bestimmt werden, ob die Energiezufuhr höher ist als die zugeführte Menge an DRI, was zu einer unerwünschten Überhitzung führen könnte, oder ob die Energiezufuhr niedriger ist als die Menge an DRI im Ofen, was eine Eisbergbildung nach sich ziehen könnte. Bei einer Abweichung des Ist-Werts der Schaumschlackenhöhe vom Soll-Wert werden Maßnahmen zur Unterdrückung der Eisbergbildung bzw. der Boiling-Effekte eingeleitet, indem die Zufuhr der für den im Elektrolichtbogenofen ablaufenden Prozess erforderlichen Stoffe reguliert wird.

Bevorzugt werden Schwingungen am Elektrolichtbogenofen mit Hilfe mindestens eines Beschleunigungssensors gemessen. Vorzugsweise werden dabei Schwingungen gemessen, die von mindestens einem Lichtbogen der mindestens einen Elektrode ausgehen. Der Körperschall wird durch die Schmelze und/oder durch die Schaumschlacke an das Ofengefäß geleitet und kann dort in Form von Schwingungen gemessen werden. Die Körperschallssensoren sind dabei insbesondere mittelbar und/oder unmittelbar mit dem Ofengefäß bzw. mit der Wand des Ofengefäßes verbunden. Die Körperschallssensoren sind beispielsweise in gleichmäßigen Abständen um das Ofengefäß herum angeordnet. Um die Genauigkeit der Körperschallmessungen zu steigern, ist zweckmäßigerweise je Elektrode ein Körperschallssensor vorgesehen.

Nach einer ersten bevorzugten Ausführungsvariante wird durch die Steuer- und/oder Regelsignale die DRI-Zufuhr reguliert. Bei Abweichung der Höhe der Schaumschlacke vom Soll-Wert wird die DRI-Zufuhrrate gedrosselt bzw. gesteuert bis wieder die notwendigen Schäumungseigenschaften der Schmelze sich einstellen. Im Betrieb eines Elektrolichtbogenofens, wenn sich beispielsweise das Niveau der Schlackenhöhe trotz konstanter oder an die Energiezufuhr angepasster DRI-Zufuhr nachhaltig ändert, bedeutet dies bei einer fallenden Schaumschlackenhöhe zunächst eine Abkühlung der Schlacke. In diesem Fall wird die DRI-Zufuhr soweit gedrosselt, bis die Höhe der Schaumschlacke wieder ansteigt.

Wenn jedoch der Schmelzprozess in den verschiedenen Bereichen des Ofengefäßes unterschiedlich abläuft, so dass die ermittelten partiellen Werte für die Schaumschlackenhöhe sich untereinander erheblich unterscheiden, wird gemäß einer weiteren bevorzugten Ausführungsvariante durch die Steuer-und/oder Regelsignale die Sauerstoff-Zufuhr reguliert. In diesem Fall wird über die einzelnen Sauerstoffeinlassvorrichtungen lokal gewirkt und die Strömung im Ofen dahingehend beeinflusst, dass sich die Werte für die Schaumschlackenhöhe, die von den einzelnen Körperschalsensoren bestimmt werden, wieder angleichen.

Die Aufgabe wird weiterhin erfindungsgemäß gelöst durch einen Elektrolichtbogenofen für eine DRI-Zufuhr, mit wenigstens einer, insbesondere mit drei Elektroden zur Erzeugung eines Lichtbogens, wobei zur Durchführung des Verfahrens nach einer der oben beschriebenen bevorzugten Ausführungen mindestens ein Körperschallsensor zum Erfassen von Schwingungen an einer Wand eines Ofengefäßes vorgesehen ist.

Die Aufgabe wird zudem erfindungsgemäß gelöst durch eine Steuer- und/oder Regeleinrichtung für einen Elektrolichtbogenofen, umfassend einen maschinenlesbaren Programmcode, der Steuerbefehle zur Durchführung des Verfahrens nach einer der oben beschriebenen bevorzugten Ausführungen aufweist.

Die in Bezug auf das Verfahren aufgeführten Vorteile und bevorzugten Ausgestaltungen sind sinngemäß auf den Elektrolichtbogenofen und die Steuer- und/oder Regeleinrichtung zu übertragen.

Ein Ausführungsbeispiel der Erfindung wird anhand einer Zeichnung näher erläutert. Hierin zeigen:
- FIG 1: schematisch einen Elektrolichtbogenofen mit einer kontinuierlichen DRI-Zufuhr, und
- FIG 2: ein Ablaufdiagramm zur Regelung des metallurgischen Schmelzverfahrens im Elektrolichtbogenofen gemäß FIG 1.

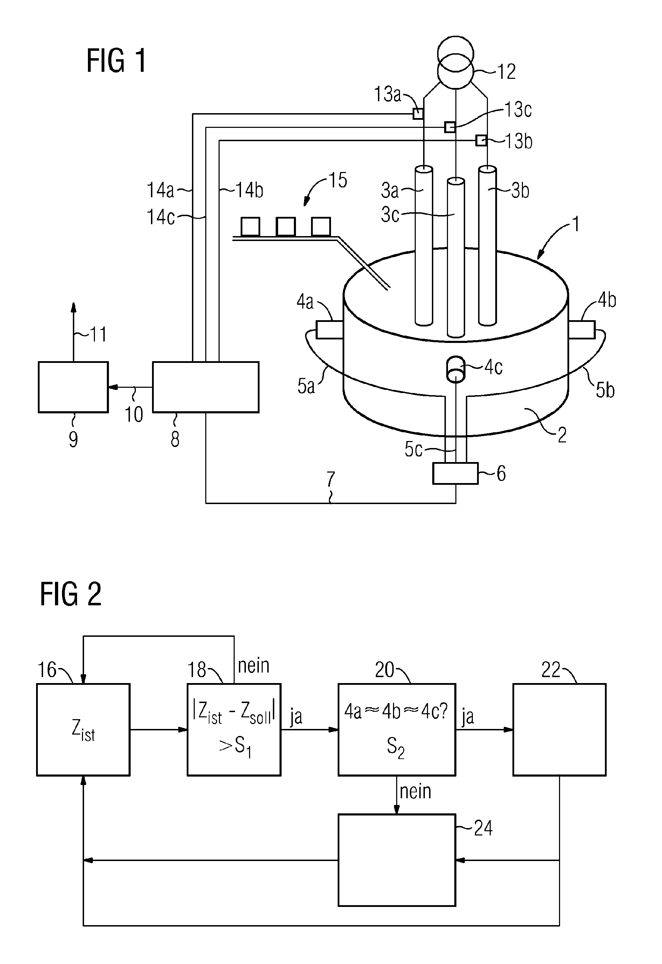

In FIG 1 ist ein Elektrolichtbogenofen 1 gezeigt, der mehrere Elektroden 3a, 3b, 3c aufweist, die über Stromzuführungen mit einer Stromversorgungseinrichtung 12 gekoppelt sind. Dem Elektrolichtbogenofen 1 wird kontinuierlich direkt reduziertes Eisen (DRI) oder Eisenschwamm, gegebenenfalls vermischt mit Schrott, zugeführt, was durch die DRI-Changiervorrichtung 15 angedeutet ist. Mit Hilfe von mindestens einer und im gezeigten Ausführungsbeispiel mit Hilfe von allen drei Elektroden 3a, 3b, 3c wird in einem Ofengefäß 2 des Elektrolichtbogenofens 1 der Eisenschwamm aufgeschmolzen.

An der Wand des Ofengefäßes 2, d.h. an der äußeren Begrenzung des Ofengefäßes 2, sind Körperschallsensoren 4a, 4b, 4c zur Messung von Schwingungen im Ofengefäß 2 angeordnet. Die Körperschallsensoren 4a, 4b, 4c sind beispielsweise in gleichmäßigen Abständen um das Ofengefäß 2 herum angeordnet. Im Ausführungsbeispiel gemäß FIG 1 ist jeweils ein Körperschallsensor 4a, 4b, 4c je Elektrode 3a, 3b, 3c vorgesehen. Mit Hilfe der Körperschallsensoren 4a, 4b, 4c wird der Körperschall am Ofengefäß 2 in Form von Schwingungen gemessen, da der Körperschall durch die Schmelze und durch die Schaumschlacke im Ofengefäß 2 geleitet wird. Die Körperschallsensoren 4a, 4b, 4c sind mit einer Signalverarbeitungseinrichtung 8 verbunden. In der näheren Umgebung des Ofengefäßes 2 bzw. unter Umständen auch unmittelbar am Ofengefäß 2 sind Signalleitungen 5a, 5b, 5c vorgesehen, die Signale der Körperschallsensoren 4a, 4b, 4c leiten. Die Signalleitungen 5a, 5b, 5c sind vorzugsweise vor Hitze, elektromagnetischen Feldern, mechanische Belastung und/oder anderen Belastungen geschützt geführt. Die Signale, die von den Körperschallsensoren 4a, 4b, 4c an die Signalverarbeitungseinrichtung 8 gegeben werden, werden im gezeigten Ausführungsbeispiel zumindest teilweise über einen Lichtwellenleiter 7 geleitet.

An den stromführenden Elektroden 3a, 3b, 3c sind zudem elektrische Sensoren 13a, 13b, 13c vorgesehen, mit Hilfe derer Strom und/oder Spannung bzw. die den Elektroden 3a, 3b, 3c zugeführte Energie gemessen werden. Die elektrischen Sensoren 13a, 13b, 13c sind mit der Signalverarbeitungseinrichtung 8, beispielsweise über Kabel ausgebildete Signalleitungen 14a, 14b, 14c für elektrische Messsignale, gekoppelt. Die Messung der Höhe der Schlacke basiert auf dem in der WO 2007/009924 beschriebenen Verfahren.

In der Signalverarbeitungseinrichtung 8 werden aus den Messsignalen der Körperschallsensoren 4a, 4b, 4c und aus den Messsignalen der elektrischen Sensoren 13a, 13b, 13c Auswertedaten ermittelt. Die Auswertedaten beziehen sich auf zumindest eine Zustandsgröße des Elektrolichtbogenofens 1, vorzugsweise auf die Schaumschlacke bzw. auf ihre Höhe. Die Signalverarbeitungseinrichtung 8 gibt ein Zustandssignal 10, vorzugsweise die aktuell berechnete und/oder vorausberechnete Höhe der Schaumschlacke an eine Steuer- und/oder Regeleinrichtung, weiterhin einfach als Regeleinrichtung 9 bezeichnet. Die Regeleinrichtung 9 ermittelt unter Berücksichtung der Zustandssignale 10 Steuer- und/oder Regelsignale 11 für den Elektrolichtbogenofen 1.

Der in FIG 1 gezeigte Elektrolichtbogenofen 1 ist in beispielhafter Ausgestaltung als Drehstromlichtbogenofen ausgebildet. Grundsätzlich ist die Erfindung bei den verschiedensten Arten von Lichtbogenöfen anwendbar, beispielsweise auch bei Gleichstromöfen.

Die im Roheisen enthaltenen Beimengungen werden durch chemische Oxidation mittels Sauerstoff hieraus gebrannt. Ziel dabei ist es den Kohlenstoffgehalt und unerwünschte Beimengungen auf vorgegebene Werte zu senken. Bei der Endkohlung reagiert der auf- oder durchgeblasene Sauerstoff mit dem im Roheisen enthaltenen Kohlenstoff zu Kohlenmonoxid, das als brennbares Abgas entweicht. Der Übergang der Begleitelemente aus dem Roheisen oder dem Eisenschwamm erfolgt dabei in zwei Schritten. Zunächst werden die Begleitelemente oxidiert, sie sind im flüssigen Eisen unlöslich. In den Verschlackungsreaktionen erfolgt ihre Abscheidung in der Schlacke.

Über in Fig. 1 nicht näher gezeigte Düsen, Einblasrohre oder Lanzen wird der Schmelze im Ofengefäß 2 Sauerstoff in den Ofen eingeblasen, ergänzend wird eventuell auch Kohlenstoff und/oder Kalk zugeführt. Im Ofengefäß 2 wandelt sich der Kohlenstoff in Kohlenstoffdioxid und/oder Kohlenstoffmonoxid um, so dass die Schaumschlacke entsteht. Das Kohlenmonoxid ist zunächst in der Schmelze gelöst bzw. wird darin in Form feiner Gasblasen zurückgehalten und geht zumindest teilweise in die Gasblase über, wobei Gasblasen zur Oberseite der Schmelze aufsteigen und die Schlackenschicht durchdringen. In einem Gausraum des Ofengefäßes oberhalb der Schmelze reagiert ein Teil des Kohlenmonoxids mit dem Sauerstoff zu Kohlendioxid.

Beim Elektrolichtbogenofen 1 ist die zugeführte Energie (elektrische Leistung sowie chemische Energie) in der Regel mit der Masse an Eisenschwamm abgestimmt. Bei Abweichungen von einem optimalen Verhältnis zwischen eingebrachter Leistung und zugeführter Masse DRI kann aufgrund abnehmender Temperatur im Stahlbad die Schlacke beginnen schlecht bzw. gar nicht zu schäumen. Dabei bildet sich ein Eisberg, der nur langsam aufgeschmolzen wird und schlimmstenfalls zu Boiling führen kann. Um Boiling-Effekte zu unterdrücken, wird über die Regeleinrichtung 9 in Abhängigkeit vom Zustandsignal 10 für die Schlackenhöhe das Verhältnis zwischen dem Kohlenstoffgehalt und dem Sauerstoffgehalt im Ofengefäß 2 gesteuert bzw. geregelt.

Der Steuerungsvorgang für den Elektrolichtbogenofen 1 ist schematisch in FIG 2 gezeigt. In einem ersten Schritt 16 wird mittels der Signalverarbeitungseinrichtung 8 das aktuelle Zustandssignal 10, d.h. der Ist-Wert Zᵢₛₜ der Höhe der Schaumschlacke, ermittelt. Der Ist-Wert Zᵢₛₜ ist insbesondere ein gemittelter Wert der Messergebnisse von allen drei Körperschallsensoren 4a, 4b, 4c. Anschließend wird im Schritt 18 der Istwert Zᵢₛₜ der Schaumschlackenhöhe mit einem Sollwert Zₛₒₗₗ verglichen. Wenn der Istwert Zᵢₛₜ vom Sollwert Zₛₒₗₗ abweicht und dabei einen vorgegebenen Schwellwert S₁ überschreitet, wird im Schritt 20 zunächst ermittelt, in wieweit sich die Signale aller drei Körperschallsensoren 4a, 4b, 4c voneinander unterscheiden. Wenn die Ergebnisse der Messungen aller drei Körperschallsensoren 4a, 4b, 4c nahezu gleich sind, indem sie einen vorgegebenen zweiten Schwellwert S₂ nicht überschreiten, wird gemäß Schritt 22 primär die DRI-Zufuhr über die Chargiervorrichtung 15 geregelt. Gleichzeitig kann ergänzend die elektrische und/oder die chemische Energiezufuhr über Strom, Sauerstoff oder sonstiges ebenfalls über eine entsprechende Regelung angepasst werden.

Alternativ zum gemittelten Ist-Wert Zᵢₛₜ werden die Messsignale der drei Körperschallsensoren 4a, 4b, 4c einzeln ausgewertet, so dass in den Schritten 16 und 18 drei sensorbezogene Ist-Werte Zᵢₛₜ separat mit dem Soll-Wert Zₛₒₗₗ verglichen werden. Erst bei Abweichungen eines der Ist-Werte Zᵢₛₜ für die Höhe der Schaumschlacke werden die drei Ist-Werte Zᵢₛₜ im Schritt 20 unter Berücksichtigung des zweiten Schwellwerts S₂ miteinander verglichen.

Wenn die Energiezufuhr im Elektrolichtbogenofen 1 höher ist als die zugeführte Menge an Eisenschwamm, entsteht unerwünschte Überhitzung, der durch eine Erhöhung der Eisenschwamm-Zufuhr entgegengewirkt wird. Im umgekehrten Fall, wenn die Energiezufuhr niedriger ist als die zugeführte Menge an Eisenschwamm, besteht die Gefahr der Eisbergbildung. Eine Abkühlung der Schlacke bedeutet hierbei, dass die Eisenschwamm-Zufuhr insbesondere bei unveränderter Energiezufuhr soweit gedrosselt wird, bis der gemessene Wert für die Höhe der Schaumschlacke Zᵢₛₜ wieder auf das gewünschte Niveau ansteigt.

Wenn die Messergebnisse der Körperschallsensoren 4a, 4b, 4c sich jedoch untereinander erheblich unterscheiden, so gilt eine pauschale Erhöhung oder Erniedrigung der Eisenschwamm-Zufuhr nicht für den gesamten Elektrolichtbogenofen 1, sondern eine lokale Behandlung ist erforderlich. In diesem Fall wird gemäß Schritt 24 in FIG 2 die Menge an eingeblasenem Sauerstoff lokal dahingehend geändert, dass sich die Messwerte der Körperschallsensoren 4a, 4b, 4c wieder angleichen. Die DRI-Zufuhr kann dabei unverändert bleiben (vom Schritt 20 direkt zum Schritt 24 gemäß Fig. 2). Alternativ kann eine gleichzeitige Anpassung sowohl der DRI-Zufuhr als auch der Sauerstoffzufuhr erfolgen, indem trotz unterschiedlicher Messewerte der drei Körperschallsensoren 4a, 4b, 4c gemäß Fig. 2 die DRI-Zufuhr im Schritt 22 geregelt wird und anschließend oder parallel dazu die Menge an Sauerstoff im Schritt 24 lokal angepasst wird.

Nach einer weiteren, alternativen Vorgehensweise erfolgt die Regelung der DRI-Zufuhr gleich nach Schritt 18, noch bevor die Messwerte der Körperschallsensoren 4a, 4b, 4c miteinander verglichen werden. In diesem Fall kann anschließend die Sauerstoffzufuhr ergänzend zur DRI-Regelung lokal geändert werden.

Ziel der Anpassung der Eisenschwamm-Zufuhr im Schritt 22 ist, dass der Kohlenstoffgehalt im Elektrolichtbogenofen 1 variiert wird, wodurch sich auch das Verhältnis zwischen dem Kohlenstoffgehalt und Sauerstoffgehalt verändert. Dieser Effekt wird alternativ gemäß Schritt 24 erreicht, indem nicht der Kohlenstoffgehalt über die Eisenschwamm-Zufuhr, sondern der Sauerstoffgehalt über die Menge an eingeblasenem Sauerstoff variiert wird. Möglich ist auch das Verhältnis zwischen dem Kohlenstoffgehalt und Sauerstoffgehalt anzupassen, indem zweitgleiche Änderungen der Eisenschwamm- und der Sauerstoff-Zufuhr vorgenommen werden. In allen Fällen wird dabei ein optimales Kohlenstoff-Sauerstoff-Verhältnis eingestellt, um insbesondere die Bildung von Eisbergen bzw. die Entstehung von Boiling-Effekten zu unterdrücken und somit einen effizienten und möglichst störungsfreien Betrieb des Elektrolichtbogenofens 1 zu gewährleisten.

## Patentansprüche

1. Verfahren zum Betrieb eines Elektrolichtbogenofens (1) für eine kontinuierliche DRI-Zufuhr, wobei der Elektrolichtbogenofen (1) mindestens eine Elektrode (3a, 3b, 3c) zum Erzeugen einer Schmelze in einem Ofengefäß (2) umfasst, wobei im Betrieb der Schmelze Sauerstoff zugeführt wird und wobei Schwingungen am Elektrolichtbogenofen (1) gemessen werden, mit deren Hilfe mindestens eine Zustandsgröße (Zᵢₛₜ) bestimmt wird und bei Abweichung der Zustandsgröße (Zᵢₛₜ) von einem vorgegebenen Soll-Wert (Zₛₒₗₗ) Steuer- und/oder Regelsignale (11) zum Ändern des Verhältnisses zwischen dem Kohlenstoffgehalt und dem Sauerstoffgehalt in dem Ofengefäß (2) ausgegeben werden.

2. Verfahren nach Anspruch 1,
wobei als Zustandsgröße (Zᵢₛₜ) die Höhe einer Schaumschlacke der Schmelze bestimmt wird.

3. Verfahren nach einem der vorhergehenden Ansprüche,
wobei Schwingungen am Elektrolichtbogenofen (1) mit Hilfe mindestens eines Beschleunigungssensors (4a, 4b, 4c) gemessen werden.

4. Verfahren nach einem der vorhergehenden Ansprüche,
wobei Schwingungen gemessen werden, die von mindestens einem Lichtbogen der mindestens einen Elektrode (3a, 3b, 3c) ausgehen.

5. Verfahren nach einem der vorhergehenden Ansprüche,
wobei Steuer- und/oder Regelsignale (11) die DRI-Zufuhr reguliert wird.

6. Verfahren nach einem der vorhergehenden Ansprüche,
wobei Steuer- und/oder Regelsignale (11) die Sauerstoff-Zufuhr reguliert wird.

7. Elektrolichtbogenofen (1) für eine kontinuierliche DRI-Zufuhr, mit wenigstens einer, insbesondere mit drei Elektroden (3a, 3b, 3c) zur Erzeugung eines Lichtbogens, wobei zur Durchführung des Verfahrens nach einem der vorhergehenden Ansprüche mindestens ein Körperschallsensor (4a, 4b, 4c) zum Erfassen von Schwingungen an einer Wand eines Ofengefäßes (2) vorgesehen ist.

8. Elektrolichtbogenofen (1) nach Anspruch 7,
wobei der mindestens eine Körperschallsensor (4a, 4b, 4c) ein Beschleunigungssensor ist.

9. Elektrolichtbogenofen (1) nach Anspruch 7 oder 8,
wobei je Elektrode (3a, 3b, 3c) ein Körperschallsensor (4a, 4b, 4c) vorgesehen ist.

10. Steuer und/oder Regeleinrichtung (9) für einen Elektrolichtbogenofen (1) für eine kontinuierliche DRI-Zufuhr, umfassend einen maschinenlesbaren Programmcode, der Steuerbefehle, welche die Steuer- und/oder Regeleinrichtung(9) bei deren Ausführung zur Durchführung des Verfahrens nach einem der Ansprüche 1 bis 6 veranlassen.
